# EUROPEAN PATENT SPECIFICATION

(11) **EP 2 318 164 B1**
(45) Date of publication and mention of the grant of the patent: **25.12.2013**
(21) Application number: 09784751.1
(22) Date of filing: 20.07.2009
(51) Int. Cl.: B22F 3/105, B23K 26/34, B29C 41/36, B29C 67/00

(54) **POWDER DISPENSING APPARATUS AND METHOD**
PULVERABGABEVORRICHTUNG UND -VERFAHREN
APPAREIL ET PROCÉDÉ DE DISTRIBUTION DE POUDRE

(30) Priority: 18.07.2008 GB 0813242
(43) Date of publication of application: 11.05.2011
(73) Proprietor: MTT Technologies Limited, Gloucestershire GL 12 8JR (GB)
(72) Inventor: SCOTT, Simon, Peter, Staffordshire ST5 5EU (GB)
(74) Representative: Rolfe, Edward William
(86) International application number: PCT/GB2009/001799
(87) International publication number: WO 2010/007396

(56) References cited:
- WO-A-95/34468
- US-A1- 2001 015 238
- US-A1- 2002 152 002
- S. YANG, J.R.G. EVANS: "Metering and dispensing of powder; the quest for new solid freeforming techniques" POWDER TECHNOLOGY, vol. 178, 24 April 2007 (2007-04-24), pages 56-72, XP002547432

## Description

The invention relates to a powder dispenser and method of dispensing powder for use in an additive manufacturing process. In particular, the invention relates to a dispenser for accurately dispensing or metering a predetermined volume of powder material for use in a selective laser sintering (SLS) or selective laser melting (SLM) process.

### Background To The Invention

Additive manufacturing or rapid prototyping methods for producing three-dimensional components are well known in the art (see for example US 4863538 - Deckard). There are various known methods of additive manufacturing including consolidation of powder materials and curing of polymeric resins. This invention relates to methods that involve powders. Such methods involve a layer-by-layer consolidation of powder material using a focused energy beam, such as a laser beam or an electron beam. Initially, the use of such freeform fabrication processes was restricted to the production of prototypes by sintering together layers of powder particles. Recent advances in technology, however, have meant that fully dense, high integrity components can be manufactured by freeform fabrication of components.

In a typical selective laser sintering (SLS) or selective laser melting (SLM) process, a thin layer of powder is deposited over a build area or powder bed within a SLS or SLM apparatus. A focused laser beam is scanned across portions of the powder layer that correspond to a cross-section of the three-dimensional article being constructed such that the powder at the points where the laser scans is consolidated either by sintering or by fusion. The cross-section is typically generated from a 3-D description of the component generated by scanning an original component or from computer-aided design (CAD) data.

After consolidation of a layer, the build surface is lowered by the thickness of the newly consolidated layer and a further layer of powder is spread over the surface. Again, the surface is irradiated with a laser beam in portions of the layer that correspond to a cross-section of the three-dimensional article, the newly consolidated layer being joined to the initial consolidated layer. This process is repeated until the component is completed.

Powder is typically spread over the build layer by a spreading means such as a roller or a wiper, spreader, or coater. It is important for the integrity of the component that the various powder layers are of consistent thickness and each layer is spread evenly over the build surface. To help achieve this it is important that an accurate dose of powder can be delivered for the spreading means to spread over the build area.

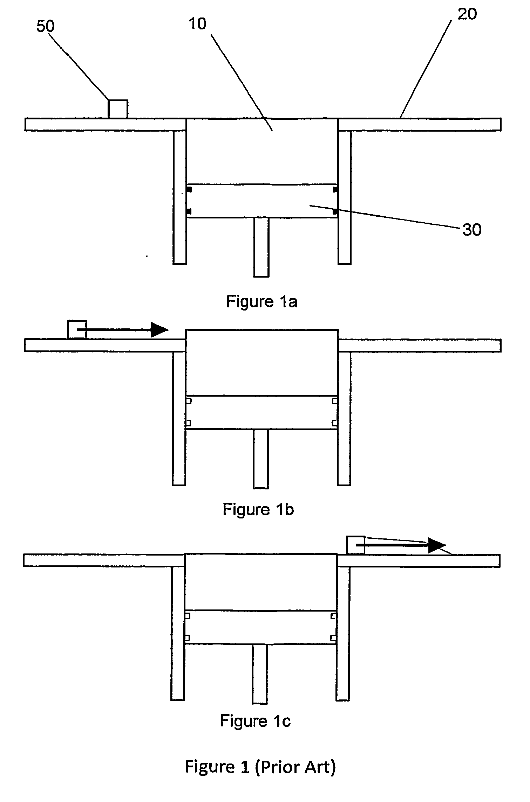

Figure 1 illustrates one prior art solution to the problem of supplying a metered dose of powder. In this method powder 10 is held in a powder source recess adjacent to a build plate 20 within a powder forming apparatus. The powder can be raised or lowered by means of a piston 30 that is slidable within the recess.

In use, a reciprocating wiper blade 50 is positioned such that its extent of travel encompasses the powder recess and the build plate. In an initial position the powder source is positioned between the wiper blade and the build plate. The piston is actuated to raise the powder above the surface of the build plate and wiper blade traverses the powder recess, collecting a portion of powder as it travels. This powder is spread in a layer over the build plate and the wiper blade is then returned to its initial position. With this process the amount of powder delivered can be determined by the travel of the piston.

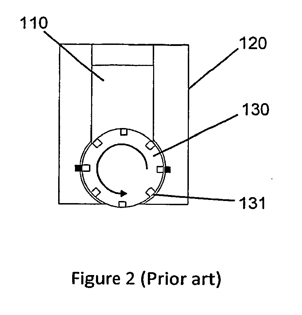

Figure 2 illustrates a further typical prior art solution for powder delivery in a additive manufacturing process. Powder 110 is contained in a hopper 120. At the lower end of the hopper there is an auger mechanism 130 having slots 131 for metering and transporting powder from the hopper for a wiper blade to subsequently spread in a layer over a build plate.

Both of these prior art methods are mechanically complex and are prone to malfunction through jamming, leakage or powder bridging. The importance of accurately timing the delivery of powder with the stroke of the wiper blade also leads to a reliance on carefully controlled electronic actuators for their operation.

WO2007/139938A2 discloses a dispensing hopper for powder, the powder being dispensed through a slot by rotation of a shaft. In one embodiment, the slot comprises a linear pattern of short slots.

### Summary of Invention

The invention provides a powder dispenser and method for dispensing powder, a powder cassette, a system and a method for producing three-dimensional articles, and additive manufacturing machines according to the appended independent claims, to which reference should now be made. Preferred or advantageous features of the invention are defined in dependent sub-claims.

Accordingly, in a first aspect a powder dispenser according to claim 1 is provided. The pre-determined volume of powder to be dispensed may be determined by the volume of some or all of the metering voids, or may be determined by a fraction of the total volume of the metering voids.

In use, powder passes into a metering void, or several of, or all of, the metering voids via the entrance opening(s) and is dispensed through the respective exit opening(s), i.e. powder passes through the metering member such that a powder dose is delivered. This dose may be substantially equal to the volume of the selected metering void or voids.
The metering member may define a single elongate metering void for dispensing a metered line of powder (as the power is to be spread over a build area it is desirable that a length or line of powder is dispensed). In this case the metering void would be the same length as the desired length of powder deposit, typically slightly longer than one side of the machine's build surface. Such a void may be of considerable length, say, 100 mm or 250 mm or 500 mm and thus may adversely affect the stiffness of the metering member. To address this problem, the metering member may define a plurality of metering voids arranged in two or more offset rows instead of a single elongate void. Such rows may be substantially parallel.

It may be advantageous for the metering member to define multiple rows of metering voids and the metering member to be arranged in the dispenser such that all or only some of the voids may be selected for metering powder. In this way the volume of powder dispensed may be varied, for example by multiples of a minimum volume, by selection of the number of rows of metering voids used in a dispensing operation.

Where there are a plurality of metering voids they may be of any suitable shape. For example, there may be two or more rows of circular holes, or square holes, or elongate holes or slots. Such an arrangement allows the metering member to have greater stiffness than would be the case if it possessed a single elongate metering void or slot. It is preferred that the sum length of the elongate metering voids equals the length of the metered line of powder. Trius, the same volume of power can be delivered along a length by a plurality of off-set voids as would be delivered by a single elongate void.

As the desired powder line length is typically determined in a particular machine to correspond to the dimensions of the build area within the machine, the maximum volume of powder able to be delivered must be controlled by varying either the width of the metering voids or the depth of the voids through the metering member, or the number of voids selected for a particular metering operation.

The metering member is reciprocally movable relative to other components of the powder dispense; i.e. the metering member may move and other components of the dispenser may remain static, or other components of the dispenser may move and the metering member may remain static. This reciprocal movement is between a first position in which powder can be passed into and retained within the metering void(s) through the entrance opening(s), and a second position in which the pre-determined, metered, volume of powder is dispensed through the exit opening(s).

It is preferred that the metering member is slideably sandwiched between first and second retaining members, the first retaining member defining a first aperture for supplying powder through the entrance opening(s), and the second retaining member defining a second aperture for allowing escape or egress of powder through the exit opening(s) of the metering member.

Preferably the first and second retaining members are arranged such that, when the metering member is in its first position (as defined above) the first aperture and the entrance opening, or openings, of the metering member are in overlapping relationship with each other, but the exit openings of the metering member are not in overlapping relationship with the second aperture of the second retaining member. By overlapping relationship it is meant that powder can pass out of one aperture and into another. Furthermore, when the metering member is in its second position the exit opening(s) and the second aperture are in overlapping relationship with each other, but the entrance openings are not in overlapping relationship with the first aperture. This means that there is no position in which there is a continuous open path through the first aperture, through the metering void(s) and through the second aperture.

In an advantageous arrangement, a plurality of metering voids may be arranged obliquely on the metering member. The metering member may be described as having a length that extends in the direction of the line of powder to be deposited and it may be advantageous for the metering voids or slots to be arranged obliquely in relation to the length, for example at an angle of between 25 degrees and 65 degrees to the length or about 45 degrees to the length. Such an arrangement may provide the advantage that the volume of powder deposited in the line of powder may be varied by adjusting the distance travelled by the metering member relative to the first aperture. For example, by limiting the relative travel of the metering member such that the first aperture only overlaps with 75 % of the area of the entrance openings the volume of powder that flows into the metering voids is less than the total volume of the metering voids. The metering voids are relatively shallow and the powder does not tend to fill up the voids unless there is a complete overlap. It may, therefore, be possible to accurately dispense volumes of powder that are less than the total volume of the metering voids by controlling the relative overlap of the first aperture with the entrances to the metering voids. The volumes of powder dispensed in this way may be more accurately calculated if the flow characteristics of the powder are taken into account.

Equally, the volume of powder that is delivered by the dispenser may be controlled or varied by altering the relative overlap between the exit openings of the metering voids and the second aperture through which the powder is delivered. In this situation, the voids may be filled completely with powder by overlapping the voids with the first aperture 100 %, but the amount of powder delivered controlled by varying the overlap between the exit openings of the voids and the second aperture to, for example, only 85 % overlap or 90 % overlap. This may result in powder being retained within the voids and not delivered to the surface.

Although other geometries can be envisaged, it is preferred that the metering member and at least one of the retaining members, for instance the second retaining member, are planar, for instance in the form of plates. The first retaining member need not be a plate and may simply be the lower portion of a powder container that is sealably engaged with the metering member when the metering member is not in the first position to prevent egress of powder through the first aperture.

It is advantageous that the first retaining member is either part of or coupled to a powder container, for example a powder hopper, such that the first aperture allows passage of a powder contained in the hopper to contact the upper face of the metering member when in its second position, or to enter the metering void if the metering member is in its first position. The first retaining member could form part of the lower wall of a container or hopper.

The first and second retaining members both define apertures through which powder can pass. Preferably the first and second retaining members are fixed in relation to each other and the first and second apertures are laterally offset from each other. This allows the metering member to move between positions relative to the retaining members where the metering void is in communication with one of the apertures but not the other.

Preferably the metering member moves through an intermediate position in which the metering void is not in overlapping communication with either the first aperture or the second aperture. In this intermediate position the desired pre-determined volume of powder may be retained, bounded by walls of the metering member, an upper surface of the second retaining member and a lower surface of the first retaining member.

It is preferred that the metering member is slideably engaged with first and second retaining members with sufficient interference that the selected powder to be dispensed does not jam in an interface between the metering member and one of the retaining members. The pressure exerted by the retaining members on the metering member may be a parameter that can be varied.

Alternatively, spacer members may be positioned between the metering member and one or both of the retaining members to separate the metering member from the retaining members.

The metering member may be reciprocally moved back and forth between first and second positions by any suitable means. Advantageously, however, the metering member is biased towards its second position in relation to the retaining members, for instance by a resilient means such as coil spring or a leaf spring or a cantilever or by other means such as gears or pulleys. Actuation of the metering member thus only needs to act to move the metering member from the second position to the first position or part of the way towards the first position. Removal of an actuation force will then allow the biasing means to automatically return the metering member to its second position.

As an alternative, the metering member may be biased towards the first position and actuated towards the second position.

Thus, it is advantageous that the metering plate or member can be actuated towards its first position to receive a load, slug, or shot of powder into the metering void and be returned to the second position to deliver this load of powder automatically. This delivery mechanism may be of particular advantage where the dispenser is adapted to interact with a roller or coater blade of a powder-forming machine. Typically such rollers or blades reciprocate back and forth over a build area to spread an even layer of powder. Advantageously, if the metering member is adapted to interact with the roller or blade, or the mechanism for moving the roller or blade, as it moves beneath the powder dispenser then powder may be dispensed automatically when the roller or wiper is in the correct position to collect it.

It is advantageous if at least one of the metering member or the retaining members, or spacer members if present, is made from a material having a low coefficient of friction; this will aid any sliding movement between the metering member and the retaining members. Examples of suitable materials include PTFE, nylon or antifriction-coated metals and ceramics. Suitable low friction materials will be apparent to those skilled in the art.

There may be spacers and/or seals disposed between the metering member and a retaining member or both retaining members. For example, the metering member may be spaced from the first retaining member by means of suitable material coupled to the first retaining member. This material allows a gap to be maintained between a lower surface of the retaining member and an upper surface of the metering member, which in turn may help prevent the metering member from sticking in use. Preferably the spacers/seals are formed of a low friction material such as PTFE.

The spacing between the metering member and a retaining member may be dependent on the grain size of the powder to be dispensed. For example, a powder having a large particle size may be dispensed by a dispenser in which the metering member and the retaining member are separated by a larger degree than would be the case were a fine grained powder being dispensed.

As well as aiding the movement of the metering member by lowering friction, the spacers may also be used as seals. If the spacer is in the form of a ring that bounds an area containing the first aperture, then powder may be prevented, or hindered, from escaping from the dispensing mechanism.

It is clear that a spacer / seal as described above could also be placed between the metering member and the second retaining member.

In an advantageous arrangement a further seal/spacer may be provided that surrounds the second aperture between the metering member and the second retaining member. Such a seal may additionally help prevent powder from escaping from the dispenser during, for example, the application of a vacuum to a chamber containing the dispenser. Any such further seal may, thus, be described as a vacuum seal.

It is advantageous that the powder dispenser is attached to or associated with a powder container or a powder hopper for containing the powder to be dispensed and supplying the powder to the metering member. Such a powder container can be designed to have an appropriate geometry to aid flow of the powder to the metering void(s) of the metering member. Such a container may contain all of the powder required for a particular build, or, alternatively may be fed from a further bulk storage hopper.

Advantageously a powder container or hopper could comprise a heating means, or be connectable to a heating means, for example a heating element for pre-heating powder within the container. A heating means may be attachable to the container, be disposed within the container or form an integral part of the container, for example a heating element may be embedded in a wall of the container.

A particularly advantageous feature of a powder dispenser according to the first aspect is that it may be associated with, or comprise, an identification means, for example a tracking device or an identification tag. Such devices or tags may provide information relating to the dispenser, for example its powder capacity or details about its geometry, or they may provide information relating to the specific powder material held within the hopper. Advantageously the tags may provide information relating to the size of particles and/or composition of powder and/or morphology of powder and may provide further data such as hazard information for a powder forming apparatus operator. The information may be available via a physical, e.g. wired, connection or may be accessible wirelessly. The tags or tracking devices may not contain all such data in themselves, but may be simply tags or flags corresponding to a particular set of parameters that can be looked up in a table either by an operator or by control programs such as control software. A particularly preferable form of identification tag would be a radio frequency identification device (RFID).

In a preferred example a dispenser according to the first aspect would be replaceably or changeably mountable within a build chamber of a powder forming apparatus. For example, if the dispenser includes a powder container then the container may comprise external fastenings or lugs for replaceably mounting the dispenser within the build chamber. It is particularly preferable that the dispenser is moveable within the build chamber, for example it is preferable that the dispenser is slideable back and forth within the build chamber so that it can be optimally positioned for a particular additive manufacturing process. Preferably the dispenser is slideably mountable within the build chamber to provide ease of positioning and ease of changing for another dispenser, for example a dispenser for dispensing a different type or composition of powder.

Alternatively, the powder dispenser may be couplable to a powder container and may be retained in a fixed position within an additive manufacturing apparatus.

In a further aspect the invention may provide a method of dispensing a pre-determined volume of powder for use in an additive manufacturing process such as a SLS or SLM process. The method uses a powder dispenser having a metering member and comprises the steps of passing powder into an entrance opening or entrance openings of one or more metering voids extending between a first face and a second face of the metering member, the total volume of the one or more metering voids being equivalent to the pre-determined volume of powder that is to be dispensed, retaining the pre-determined volume of powder within the metering void or metering voids, and dispensing the pre-determined volume of powder from an exit opening or exit openings of the metering voids in the second face of the metering member.

Preferably the method comprises of the step of moving, preferably sliding, the metering member between a first position in which powder can pass through the entrance opening or entrance openings of the one or more metering voids but not through the exit opening or exit openings, for example, a position in which the exit openings of the one or more metering voids are physically blocked, and a second position in which powder can pass through the exit opening or exit openings of the one or more voids but not pass into the entrance opening nor entrance openings, for example where the entrance openings are physically blocked. The dispenser components are arranged such that only the predetermined volume of powder is transferred between the first and the second positions and thus only the predetermined volume of powder is dispensed.

An advantageous arrangement for achieving this method is one in which the metering member is sandwiched between first and second retaining members and the method further comprises of the step of passing powder through a first aperture defined through the first retaining member into the entrance opening or entrance openings of the one or more metering voids, the second retaining member preventing egress of the powder through the exit openings, and moving the metering member relative to the first and second retaining members such that a volume of powder equivalent to the predetermined volume passes through the exit opening or exit openings in the one or more metering voids and through a second aperture depart defined through the second retaining member.

In this arrangement an a first position the first aperture allows powder to enter the metering void and the second retaining member prevents egress of powder, the metering member is then moved relative to first and second retaining members via an intermediate position such that the first retaining member blocks the entrance openings and at the same time, the exit openings are still blocked by the second retaining member. As the metering member moves further it move to a second position such that the exit openings come into overlapping relationship with the second aperture then the predetermined volume of powder retained within the metering void is dispensed.

Advantageously, the powder dispenser may be a component of or be associated with a powder container or hopper feeding powder through the first aperture.

Preferably, the powder is dispensed in a line of suitable length for a particular powder forming operation.

Preferably the metering member is biased towards the second position by a biasing means and the method involves the step of mechanically actuating the metering member toward the first position and allowing the biasing means to move the metering member back towards the second position. In a preferable example, the powder dispenser is used in conjunction with a powder forming apparatus that comprises a reciprocating roller or spreader arm for spreading a layer of powder over a build surface. Advantageously, movement of the metering member may be actuated by an interaction between the metering member and the powder roller or spreader arm mechanism as it is reciprocates over the powder surface. This actuation by use of the roller or spreader arm mechanism allows powder to be dispensed at precisely the correct moment in the spreader's reciprocating cycle for the powder to be collected and obviates the requirement for complex electronic actuation to achieve correct timing. The powder is automatically dispensed at the appropriate point of timing for proper operation of the process.

With the use of a dispenser having a metering member with an appropriate arrangement of metering voids it may be possible to controllably vary the volume of powder delivered by the dispenser. For example, the use of a metering member having a plurality of oblique voids may allow the volume delivered by the dispenser to be varied by varying the relative movement of the metering member relative to the first aperture. Such a member may meter its maximum volume of powder when the member is moved completely to its first position, but may meter less volume of powder if the member is not moved completely to its first position. This capability may be of particular advantage in the context of an additive manufacturing apparatus where the volume of powder required to build up successive layers may vary.

The dispensing of powder may involve a step of vibrating the powder source or hopper in order to improve flow properties of the powder and help prevent powder bridging. The dispenser or components of the dispenser may also be vibrated.

In a further aspect a replaceable powder cassette is provided for supplying powder in a powder forming apparatus. The cassette comprises a container portion for containing the powder, a mount for removably mounting the cassette within the powder-forming apparatus, and a dispenser for dispensing a predetermined volume of powder from the container. The advantage of having a replaceable powder cassette is that changeover between different materials can be quickly and easily achieved with minimal clean down time. To change materials, one cassette can be removed from a machine and a different cassette can be added.

Different powders will have different have different particle size, particle morphology, electrical properties, flow properties and chemical compositions. The optimum design of a powder dispenser for one species of powder is not necessarily the optimum design for another species of powder. By use of a replaceable powder cassette, the cassettes can be designed or tailored specifically for individual types of powder. Furthermore, different volumes of powder may be dispensed by using different cassettes having different dispensing characteristics. Removable powder cassettes allow for a significant flexibility in the additive manufacturing process.

Advantageously a cassette may be supplied comprising powder for use in a powder forming operation. The supply of a cassette preloaded with powder may obviate the need for potentially risky handling of hazardous powdered materials. Preferably the dispenser used with the cassette is a powder dispenser as described above.

Other features already described in relation to the powder dispenser, such as a heater for preheating powder and identity tags are also advantageous in relation to a replaceable powder cassette. The cassette may contain enough powder for a particular build or may be replenished with powder from a larger storage hopper that feeds into the top of the cassette.

It is particularly preferable that the cassette is removably mountable within a build chamber of a powder forming apparatus. This alleviates the need to make and break seals when changing the cassette and also allows some flexibility in the positioning of the cassette within the build chamber.

In a further aspect a system for producing three-dimensional articles by additive manufacture is provided. The system comprises a rapid manufacturing or additive manufacturing apparatus, for example an SLS or SLM machine, the apparatus including a build chamber, a spreader means or wiper arm for spreading a layer of powder material over a build surface within the build chamber, and an irradiation means for irradiating selected portions of the build surface corresponding to a cross-section of the article to be formed. The preferred irradiation means is a laser source. The system further comprises a control means for monitoring and controlling the apparatus and process parameters and a replaceable cassette for containing and dispensing powder for use in the process, the cassette being replaceably mountable within the build chamber.

Preferably the replaceable cassette is associated or coupled to a tracking device or identity tag capable of communication with the control means to supply information or data relating to the cassette and/or the powder within the cassette to the control means. This allows the control means to control or modify parameters to those particularly suitable to the powder used for the forming process.

Advantageously the control means may cause information relating to the cassette mounted or installed in the powder forming apparatus to be displayed to an operator. Such information may be particularly advantageous where the powder material is of a particularly hazardous nature.

The system may further comprise an inert gas supply and a gas circuit for supplying inert gas to the build chamber. In such a system a filter will be disposed within the inert gas circuit for filtering powder particles.

Preferably the filter is associated with a tracking device or identity tag capable of communication with the control means and the control means is capable of processing data from the filter and from the cassette to ensure that the system only operates when both the powder species and the type of filter are compatible. This is advantageous in situations where, for example, the powder is too fine to be filtered by a particular type of filter or where material has been changed within the powder forming apparatus and the combination of different powder materials in the same filter may be hazardous.

The cassette for the system according to this aspect may be any cassette as described above.

Preferably the control means comprises a computer, either external to the powder-forming apparatus or integral with it, running suitable software for controlling operation of the radiation source, spreader means, inert gas supply etc. Where the system includes a dispenser that is capable of delivering controllably varying volumes of powder to a build surface, it may be advantageous that the control means includes means for calculating the volume of powder required for each layer. The volume of powder delivered to the build surface to form each layer may thus be varied according to this calculation to try and optimise the volume of powder delivered.

In a further aspect a method of forming a three-dimensional object is provided, the method comprises a step of a) mounting a powder cassette having a powder dispenser within a build chamber of a powder forming apparatus, b) actuating the dispenser to dispense powder, c) spreading the powder to form a layer of powder over a build surface, d) irradiating a portion of the layer corresponding to a cross section of the three-dimensional object with a high energy beam to consolidate the powder in the irradiated portion by melting or sintering, e) lowering the build surface by the thickness of the consolidated portion, and then repeating steps b to e until the desired three-dimensional shape is formed.

It is particularly preferable in such a method that the powder dispenser is actuated to release a predetermined volume of powder by movement of a reciprocating spreader means that spreads the powder to form a layer of powder over the build surface. This interaction allows for a simple and effective timing of the powder metering.

In further aspects a powder forming apparatus for example, a SLS or SLM apparatus is provided comprises a powder dispenser as described above, or a replaceable powder cassette as described above.

A preferred embodiment of the invention will now be described with reference to the Figures in which;
Figures 1a, 1b and 1c illustrate a typical prior art piston based powder delivery method.
Figure 2 illustrates a typical prior art auger mechanism for powder delivery.
Figure 3 is a perspective view of components of a powder dispenser according to the invention.
Figure 4a is a plan view of a first retaining member of a powder dispenser according to the invention
Figure 4b illustrates a metering plate for a powder dispenser according to the invention.
Figure 4c illustrates a second retaining member for a powder dispenser according to the invention.
Figure 5 illustrates the arrangement of components in the powder dispenser according to the invention.
Figure 6a to 6d illustrates operation of the powder dispenser according to the invention.
Figure 7 illustrates a plan view of a dispensing plate for a powder dispenser according to the invention when in its actuated position.
Figures 8 to 10 illustrate plan views of metering plates according to the invention having different shapes and arrangements of metering voids.
Figures 11A to 11C illustrate the operation of a dispenser according to an aspect of the invention having multiple selectable rows of metering voids.
Figure 12 illustrates a plan view of a metering plate for a dispenser according to an aspect of the invention showing an arrangement of oblique metering voids.
Figure 13 illustrates a plan view of a metering plate for a dispenser according to an aspect of the invention showing an arrangement of oblique metering voids.
Figure 14 illustrates a plan view of a metering plate for a dispenser according to an aspect of the invention showing an arrangement of metering voids that are functionally equivalent to the slots illustrated in figures 12 and 13.
Figure 15A is a schematic diagram illustrating the positions of various seals in a dispenser according to an aspect of the invention.
Figures 15B and 15C are plan views showing the positions of the seals of the dispenser of figure 15A.

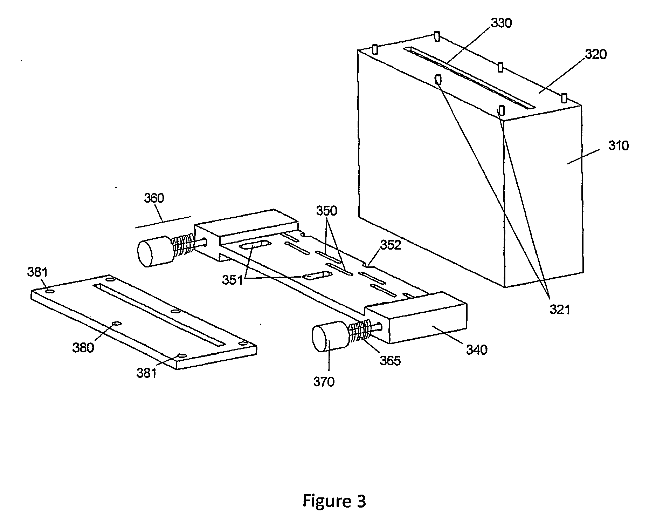

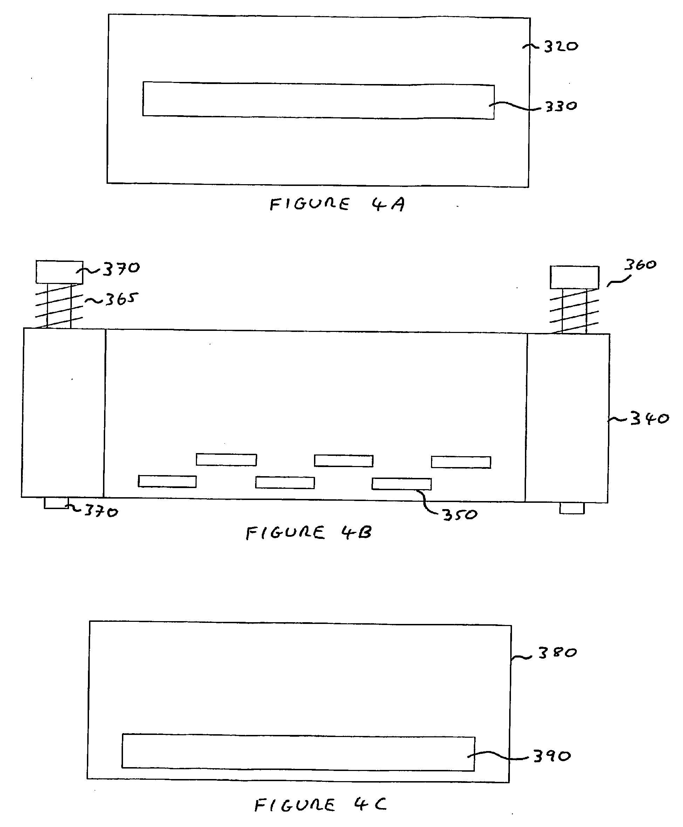

Figures 3 and 4 illustrate component parts of a preferred embodiment of a powder dispenser according to the invention. The dispenser is coupled to a powder container 310, which defines an internal space for retaining a powder material (the dispenser and the container being component parts of a powder cassette). The container is of substantially cuboid shape having four sidewalls, a top wall and a bottom wall. The bottom wall forms a first retaining plate 320 of the dispenser having a longitudinal slot 330 defined through its thickness. Six spacing pins 321 extend from the first retaining plate.

The longitudinal slot 330 of the first retaining plate 320 is substantially in the centre of the plate and allows passage of powder contained within the container 310. (Figure 3 shows the first retaining member at the top of a container, i.e. facing upwards; in use the container is inverted and the first retaining member is the lower wall of the container).

The dispenser includes a metering member 340 having a plurality of offset metering voids or slots 350. The metering member is in the form of a substantially rectangular plate having first and second faces, the voids extending through the plate from one face to the other. Preferably the metering plate is manufactured from a material with low coefficient of friction such as polytetrafluoroethylene (PTFE) or nylon.

The metering plate 340 includes a pair of biasing elements or return mechanisms 360. Each return mechanism comprises a helical spring 365 wound around, and urging the metering plate against, a runner 370 that is slideably disposed through the metering plate 340.

The metering voids 350 consist of a pair of parallel rows of voids that are offset from the longitudinal centreline of the metering plate.

The metering plate defines a number of slots 351 or recesses 352 that accommodate the spacing pins 321 of the first retaining plate.

The dispenser further comprises a second retaining member 380 in the form of a substantially rectangular plate having a longitudinal slot 390 defined through the thickness of the plate for the passage of powder, the slot 390 being offset from the longitudinal centreline of the second retaining plate.

The second retaining plate 390 has six recesses 381 that engage with the spacing pins 321 extending from the first retaining plate 320.

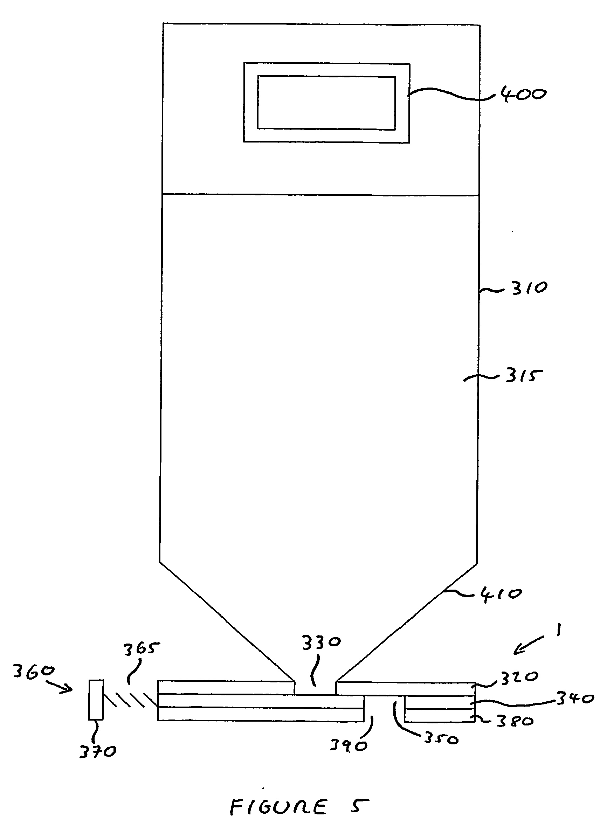

When assembled, the metering plate is sandwiched between the first and second retaining plates. This can be seen in Figure 5.

The dispenser 1 forms a lower part of a powder cassette 2 having a powder container 310 filled with a powder 315. The cassette has an external mounting means 400 for allowing it to be mounted within an additive manufacturing machine. Powder is directed by means of internally sloping walls 410 within the container towards the central aperture 330 of the first retaining plate 320 the first retaining plate forming a bottom wall of the powder container. The aperture 330 through the first retaining plate is, therefore, always in communication with the interior of the container.

The dispensing mechanism 1 of the cassette consists of the metering plate 340, slideably sandwiched between the first retaining plate 320 and the second retaining plate 380. In the position as illustrated in Figure 5 the metering plate 340 is urged towards a position in which the metering voids 350 are in overlapping relationship with the aperture 390 through the second retaining plate 380, but not with the aperture 330 through the first retaining plate 320.

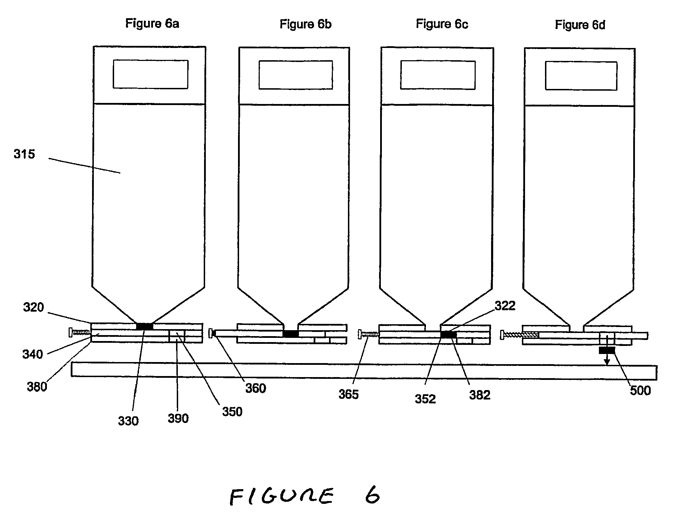

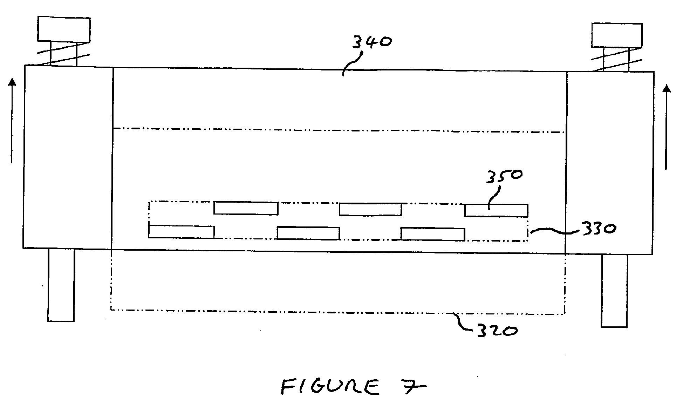

Operation of the powder dispenser will now be described with reference to Figure 6a to 6d and Figure 7.

In an initial state (Figure 5 or Figure 6a) the powder dispenser is arranged such that the metering plate 340 is biased towards a position in which the metering voids 350 overlap with the second aperture 390 in the second retaining plate 380 but do not overlap with the first aperture 330 in the first retaining plate 320.

The retaining plates are held in tight engagement with the metering plate such that powder is prevented from escaping the powder container.

Powder communicates with the first aperture in the first retaining plate but is prevented from passing completely through the first retaining plate (i.e. is retained within the first aperture) by an upper surface of the metering plate. The upper surface of the metering plate forms a lower boundary or wall to the first aperture.

As illustrated in Figure 6b and Figure 7 the metering plate can be actuated by physically moving it relative to the first and second retaining plates against the action of the resilient return mechanism 360. This brings the metering voids into overlapping communication with the first aperture and powder passes from the first aperture into the metering voids. Powder is prevented from exiting the metering voids, i.e. prevented from passing completely through the metering plate by an upper surface of the second retaining member which acts as a lower boundary or wall to the metering voids.

As the actuation means is released the helical spring 365 of the return mechanism 360 urges the metering plate towards its original position (as illustrated in Figure 6c). The metering voids are thus slideably translated such that they are no longer in overlapping engagement with the first aperture. Because the plates are sandwiched together with a degree of interference the powder is substantially prevented from becoming jammed between the interface of the metering layer and either of the first or second retaining plates. As the metering member travels towards its original position it passes through an intermediate stage (Figure 6c) in which the metering voids are neither in communication with the first aperture nor the second aperture. In this intermediate position the metering voids form a closed volume defined by walls of the metering plate 352 a lower surface of the first retaining member 322 and an upper surface of the second retaining member 382. Within this metering void a metered dose or slug of powder 500 is retained.

As the metering plate reaches its final position in the cycle (Figure 6d) the metering voids are returned to overlapping relationship with the second aperture of the second retaining plate. The action of gravity allows the metered slug of powder 500 to be dispensed through the aperture in the second retaining plate.

In a preferred embodiment the cassette comprising the powder dispenser is removably mountable within an additive manufacturing apparatus typically a selective laser sintering (SLS) or selective laser melting (SLM) apparatus. Such an apparatus uses a spreading means such as a wiper arm or coater arm to spread a dispensed line of powder over a build area. Such a wiper arm may be slideably mounted on a rail within the build chamber of a powder processing apparatus and reciprocally actuated backwards and forwards by means of a drive mechanism, for instance a belt or chain drive mechanism. It is important that timing of the release of a slug of powder from the powder dispenser coincides with the appropriate point in the reciprocating motion of the wiper arm such that the wiper arm is able to collect the slug of powder and spread it over the build surface. An advantage of the present invention is that the wiper arm mechanism can physically engage with the metering plate of the powder dispenser to actuate it against the biasing means. For example, in a preferred embodiment a wiper arm travels on a jig and the wiper arm itself passes over a build area and beyond the powder dispenser. A portion of the wiper arm jig interacts with the metering plate to allow powder to access the metering voids as the wiper arm returns back towards the build area the metering plate is allowed to return, under the influence of its own resilient return member, to the position where the newly metered slug of powder can be delivered from the powder dispenser into the path of the wiper arm.

It may be preferable for the powder cassette and the powder spreader means to be slideably mounted on the same rail within the powder-forming machine.

In a preferred example the cassette includes holes in its upper wall for engaging with a large powder hopper which stores sufficient powder for a full build.

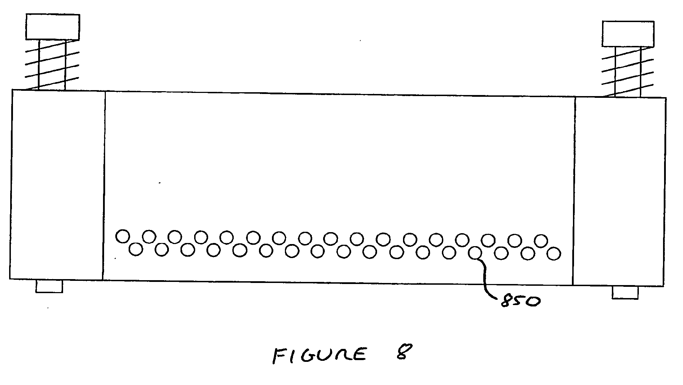

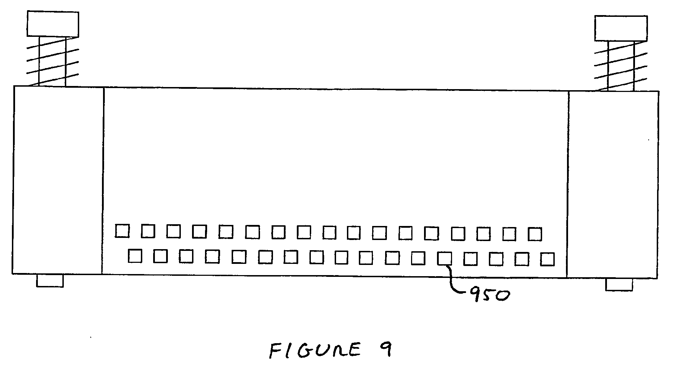

In the preferred embodiment of a dispenser described above, the metering voids are in the form of elongate voids that extend through the metering plate (see, for example Figure 4B). It is clear that the invention is not limited to metering voids that are elongate. For example in Figure 8, an equivalent metering effect is provided by the provision of two substantially parallel rows of circular metering voids 850. Likewise, Figure 9 illustrates an embodiment of a metering plate having parallel rows of offset square metering voids 950. It is noted that all other elements in Figures 8 and 9 are as described in relation to the embodiment illustrated in Figure 4B.

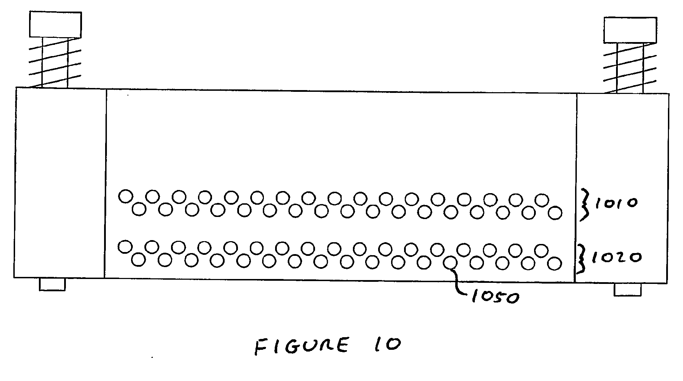

Figure 10 illustrates an embodiment of a metering plate having two sets of circular metering voids. The dispenser can, in a single actuation step, deliver a first volume of powder defined by the volume of the metering voids in the first set of metering voids 1010 or a second volume of powder defined by the total volume of the metering voids in both first and second sets 1010 and 1020.

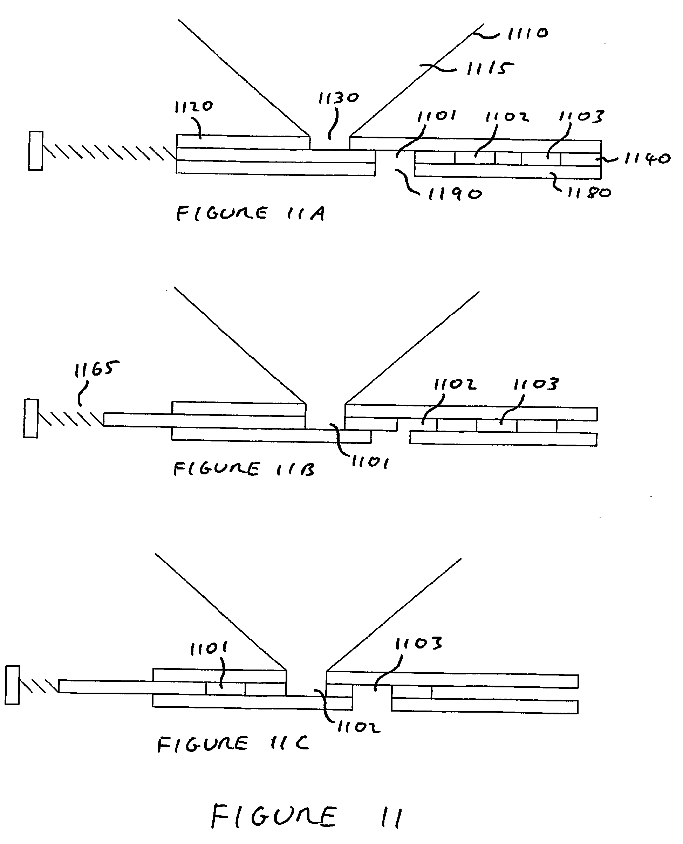

Figures 11A to 11C illustrate the operation of a dispenser having a metering plate defining multiple sets of metering voids 1101, 1102, 1103. The metering plate 1140 defining these three sets of metering voids is sandwiched between a first retaining member 1120 and a second retaining member 1180 as described in detail for a dispenser having a single set of metering voids. Operation of the dispenser according to this further embodiment is essentially similar to that described above in relation to Figure 6. In an initial position powder 1115 contained within a container 1110 passes through a first aperture 1130 and is prevented from passing out of the container by an upper surface of metering plate 1140.

The metering plate is actuated so that it slides relative to the first retaining plate and the second retaining plate, thus bringing first set of metering voids 1101 into an overlapping relationship with the first aperture 1130, thus allowing powder in a container to enter the first set of metering voids. As the metering plate is further actuated in the same direction against the actuation of the biasing spring 1165, a second set of metering voids 1102 is brought into overlapping relationship with the first aperture 1130, and powder is allowed to fill this set of metering voids. The same is repeated such that a third set of metering voids 1103 are filled with powder.

Once all three of the sets of metering voids have been filled with powder the positive actuation is released (either completely or in stages) and the biasing spring returns the metering plate to its original position. In doing so the third set of metering voids pass over the second aperture defined through the second retaining member. This allows the powder contained within the third set of metering voids to be dispensed. The second set of metering voids and the first set of metering voids also pass into an overlapping relationship with the second aperture 1190 such that powder contained within these sets of metering voids is also dispensed.

Using a dispenser of this construction it is possible to vary the volume of powder dispensed. The total volume of powder dispensed can be either the total volume of the first set of metering voids 1010, or the volume of the first set of metering voids plus the second set of metering voids, or the total volume of all three sets of metering voids. Selection of one, two or three sets of metering voids for delivery of powder is achieved by varying the distance the metering plate is actuated against the biasing spring.

Each set of metering voids can be either a single elongate metering void or a plurality of metering voids as described in relation to the preferred embodiment above.

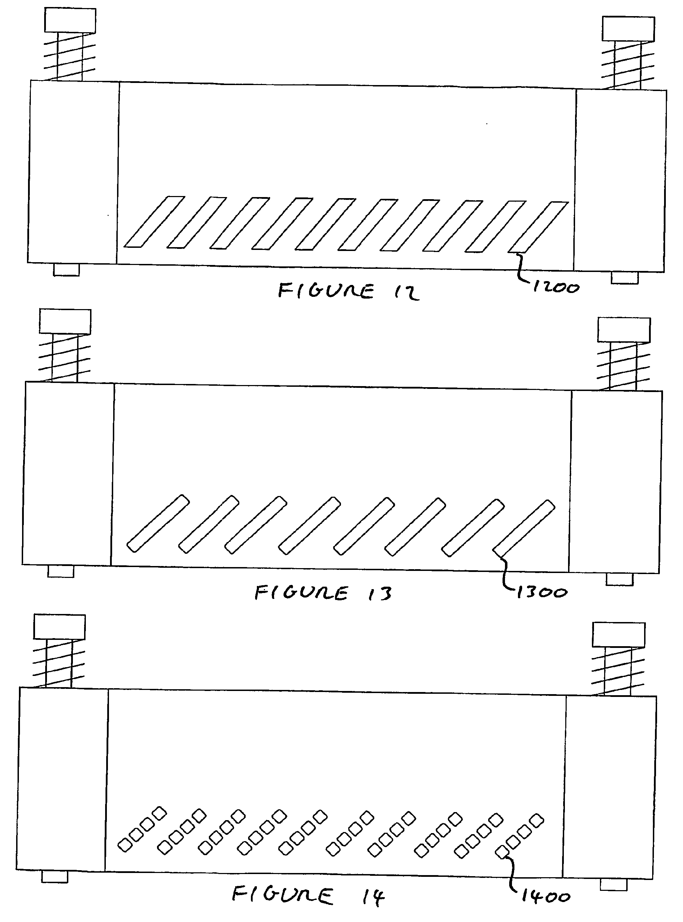

In a further embodiment it is possible to controllably vary the volume of powder delivered by a dispenser over a range of volumes. The metering plates illustrated in figures 12 and 13 have a plurality of oblique elongated metering voids 1200, 1400. The volume of powder that enters these voids depends on the extent to which the voids overlap with an aperture in the first retaining plate of the dispenser. If the metering voids pass beneath the aperture completely then the voids will completely fill with powder. If, however, the metering plate only moves far enough for, say, 90 % of the area of the metering voids to pass beneath the aperture then the voids will not fill completely and less volume of powder will be delivered. By the use of a controller that varies the actuation distance of the metering plate different volumes of powder may be delivered with each stroke.

A practical use of the ability to controllably vary the volume of powder delivered by the dispenser may be found in the construction of three dimensional objects by laser melting. When a laser beam melts a portion of a layer of powder, the melted portion shrinks in relation to the surrounding powder. This is because the laser beam is densifying the powder in this portion and removing the porosity associated with powders. Different layers of such a construction may involve different amounts of laser melting and each layer will, therefore, have a unique degree of shrinkage. For example, one layer may involve the melting of 5 % of the surface within the build area while another layer in the same construction may involve the melting of more than 50 % of the surface within the build area.

To produce a product with high integrity it is preferable that the thickness of each layer of powder is maintained at the same value throughout the build process. This, more powder needs to be added in order to maintain the same powder thickness when 50 % of the previous layer has been consolidated compared to the case where only 5 % has been consolidated. In practice an excess of powder is often applied to all layers to overcome this issue. The process can be made more efficient, however, if the volume of powder delivered to each layer can be varied to accommodate the unique requirement of each layer.

Thus, a preferred specific embodiment of a dispenser employs a metering plate that allows the volume of powder delivered to be varied by varying the relative movement of the metering plate and a control means that calculates the volume of powder required for each layer and actuates the metering plate accordingly to deliver the desired volume.

The metering plate illustrated in figure 14 shows an arrangement of metering voids that is functionally equivalent to the plates shown in figures 12 and 13.

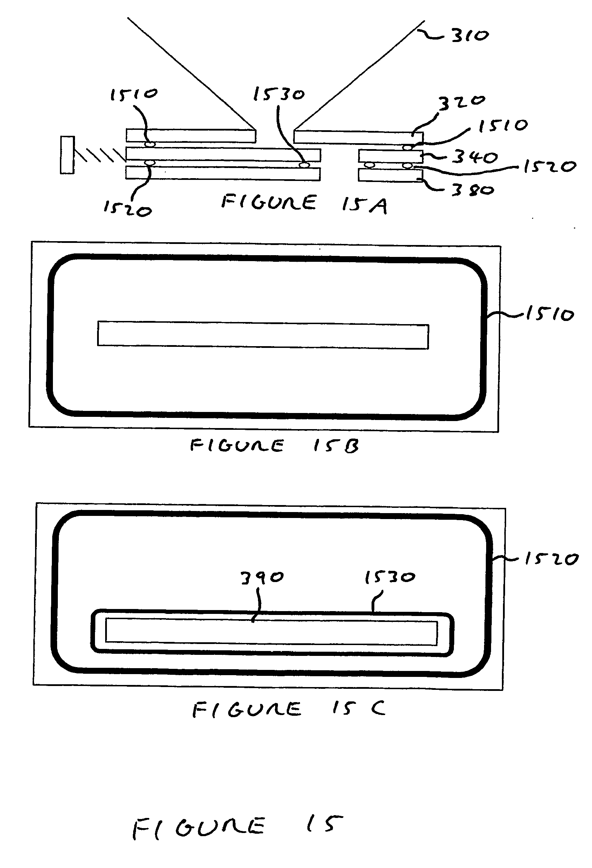

An optional feature that may be employed on any dispenser described above is the use of spacing members between the metering plate and its retaining plates. Figures 15A to 15C illustrate a specific example of such spacing members. The dispenser of Figures 15A to 15C is substantially the same as the dispenser described above in relation to figures 3 to 7, and the same reference numerals have been used for common features. The metering member 340 is spaced from the first retaining plate 320 by a PTFE spacing member 1510. The spacer is a continuous ring that bounds the lower surface of the first retaining member 320 and allows the metering member to slide without the upper surface of the metering member contacting the lower surface of the first retaining member. Powder from the powder container 310 can sit on the surface of the metering member, but the spacer 1510 prevents this powder from escaping from the dispenser. In other words, the spacer 1510 acts as a powder leak seal.
As powder can be maintained on the upper surface of the metering member, it may be possible for this powder to rub against the lower surface of the first retaining plate when the metering member is actuated. Thus, it is preferable that the spacing is maintained to be a distanced slightly greater than the largest particle diameter in the powder.

The lower surface of the metering plate can similarly be separated from the second retaining member 380 by a second spacer 1520. As with the first spacer 1510 the second spacer 1520 is in the form of a ring that bounds the second retaining member and acts as a sliding surface for the metering member while also acting as a powder leak seal.

In the specific embodiment illustrated in figures 15A a third spacer 1530 is situated between the metering member 340 and the second retaining plate 380. This third spacer surrounds the longitudinal slot that is defined through the second retaining plate 380 to allow powder to be dispensed. This third spacer acts as a powder seal to prevent powder that may be situated on top of the second retaining member from escaping the dispenser though the opening 390. Thus the spacer 1530 is effectively a powder leak seal. The third seal 1530 may be particularly advantageous in situations where powder is to be deposited in a vacuum and the pumping down process may otherwise cause powder to escape through the opening 390.

## Claims

1. An additive manufacturing powder dispenser for dispensing powder for use in an additive manufacturing process comprising,
a metering member (340,1140) for dispensing a line of powder having a predetermined volume, the metering member (340,1140) defining one or more metering voids (350,850,950,1050,1101,1102,1103,1200,1300,1400) extending through the metering member (340,1140), the or each metering void (350,850,950,1050,1101,1102,1103,1200,1300,1400) having an entrance opening defined in a first face of the metering member (340,1140) and an exit opening defined in a second face of the metering member (340,1140), **characterised in that** the metering member (340,1140) is reciprocally movable relative to other component parts (320,380,1120,1180) of the dispenser between a first position in which powder is able to pass into and be retained within the metering void(s) (350,850,950,1050,1101,1102,1103,1200,1300,1400) through the entrance opening(s) and a second position in which the predetermined volume of powder is able to be dispensed through the exit opening(s).

2. A dispenser according to claim 1 in which, 1) the volume defined by the one or more metering voids is equivalent to the predetermined volume of powder; and/or 2) the metering member defines an elongate metering void for dispensing powder; and/or 3) the metering member defines a plurality of metering voids arranged in two or more offset rows for dispensing powder; and/or 4) the metering member comprises a plurality of oblique metering voids for dispensing powder.

3. A dispenser according to claim 1 or claim 2 in which the metering member (340,1140) is movably sandwiched between first and second retaining members (320,380,1120,1180),
the first retaining member (320,1120) defining a first aperture (330,1130) for supplying powder to the entrance opening(s) and the second retaining member (380,1180) defining a second aperture (390,1190) for allowing dispensing of powder from the exit opening(s) and in which in the first position the first aperture (330,1130) and the entrance opening(s) may be in overlapping relationship with each other but the exit opening(s) may not be in overlapping relationship with the second aperture (390,1190), and in the second position the exit opening(s) and the second aperture (390,1190) may be in overlapping relationship with each other but the entrance opening(s) may not be in overlapping relationship with the first aperture (330,1130).

4. A dispenser according to claim 3 in which the metering member (340,1140) and at least one of the retaining members (320,380,1120,1180) is planar.

5. A dispenser according to claim 3 or claim 4 in which the first retaining member (320,1120) is coupled to a powder container (310) such that the first aperture (330,1130) allows passage of a powder contained in the container (310 and the first retaining member may form part of the container, for example a lower wall of the container.

6. A dispenser according to any of claims 3 to 5 in which the first and second retaining members (320,380,1120,1180) are fixed in relation to each other and the first and second apertures (330,390,1130,1190) are laterally offset from each other.

7. A dispenser according to any of claims 3 to 6 in which the metering member (340,1140) is slideable relative to the first and second retaining members (320,380,1120,1180).

8. A dispenser according to any of claims 3 to 7 in which 1) a seal (1510) is disposed between the first retaining member (320,1120) and an upper surface of the metering member (340,1140) to prevent unwanted egress of powder from the dispenser, and/or a seal (1520) is disposed between the second retaining member (380,1180) and a lower surface of the metering member (340,1140) to prevent unwanted egress of powderfrom the dispenser, and/or 2) a seal (1530) is disposed around the second aperture (390,1190) between the second retaining member (380,1180) and a lower surface of the metering member (340,1140) to prevent egress of powder from the second aperture (390,1190) unless the metering member (340,1140) is appropriately positioned.

9. A dispenser according to claims 1 to 8 in which the metering member (340,1140) is biased towards the first position or the second position.

10. A dispenser according to any preceding claim having a plurality of metering voids (350,850,950,1050,1101,1102,1103,1200,1300,1400), in which the dispenser can be actuated to dispense powder from a predetermined fraction of the total void volume in order to vary the volume of powder dispensed.

11. A replaceable powder cassette for supplying powder in an additive manufacturing process, the cassette comprising,
a container (310) for containing the powder,
a mount (400) for removably mounting the cassette within a build chamber of an additive manufacturing apparatus, and in which the container (310) is connected to or couplable to
a dispenser (1) for dispensing a predetermined volume of powder from the container (310), wherein the dispenser (1) is a powder dispenser as defined in any of claims 1 to 10.

12. A cassette according to claim 11 further comprising powder for use in the additive manufacturing process.

13. A cassette according to claim 11 or claim 12 in which the mount (400) includes a slider mechanism for interacting with rails fixed within the additive manufacturing apparatus.

14. A cassette according to any of claims 11 to 13 further comprising an identification means, for example a tracking device or identity tag and in which the identification means may be a radio frequency identification tag and in which the identification means may hold information relating to powder contained in the cassette.

15. A selective laser sintering or selective laser melting machine comprising a powder dispenser as defined in any of claims 1 to 10.

## Patentansprüche

1. Ausgabeeinrichtung für Additivherstellpulver zum Ausgeben von Pulver zur Verwendung bei einem Additivherstellprozess, umfassend,
ein Dosierelement (340, 1140) zum Ausgeben einer Pulverlinie, die ein vorbestimmtes Volumen besitzt, wobei das Dosierelement (340, 1140) einen oder mehrere Dosierhohlräume (350, 850, 950, 1050, 1101, 1102, 1103, 1200, 1300, 1400) definiert, die sich durch das Dosierelement (340, 1140) erstrecken, wobei der oder jeder Dosierhohlraum (350, 850, 950, 1050, 1101, 1102, 1103, 1200, 1300, 1400) eine Eintrittsöffnung, die in einer ersten Seite des Dosierelements (340, 1140) definiert ist, und eine Austrittsöffnung besitzt, die in einer zweiten Seite des Dosierelements (340, 1140) definiert ist,
**dadurch gekennzeichnet, dass**
das Dosierelement (340, 1140) relativ zu anderen Komponententeilen (320, 380, 1120, 1180) der Ausgabeeinrichtung zwischen einer ersten Position, in der das Pulver in den Dosierhohlraum / die Dosierhohlräume (350, 850, 950, 1050, 1101, 1102, 1103, 1200, 1300, 1400) durch die Eintrittsöffnung(en) gelangen und darin gehalten werden kann, und einer zweiten Position hin- und her bewegbar ist, in der das vorbestimmte Pulvervolumen durch die Austrittsöffnung(en) ausgegeben werden kann.

2. Ausgabeeinrichtung nach Anspruch 1,
wobei 1) das von dem einen oder den mehreren Dosierhohlräumen definierte Volumen äquivalent zu dem vorbestimmten Pulvervolumen ist; und/oder 2) das Dosierelement einen länglichen Dosierhohlraum zum Ausgeben von Pulver definiert; und/oder 3) das Dosierelement eine Mehrzahl von Dosierhohlräumen definiert, die in zwei oder mehr versetzten Reihen zum Ausgeben von Pulver angeordnet sind; und/oder 4) das Dosierelement eine Mehrzahl schräger Dosierhohlräume zum Ausgeben von Pulver umfasst.

3. Ausgabeeinrichtung nach einem der Ansprüche 1 oder 2,
wobei das Dosierelement (340, 1140) bewegbar zwischen dem ersten und zweiten Halteelement (320, 380, 1120, 1180) geschichtet ist, wobei das erste Halteelement (320, 1120) eine erste Durchbrechung (330, 1130) zum Liefern von Pulver an die Eintrittsöffnung(en) definiert, und das zweite Halteelement (380, 1180) eine zweite Durchbrechung (390, 1190) definiert, um ein Ausgeben von Pulver aus der/den Austrittsöffnung(en) zuzulassen, und wobei in der ersten Position die erste Durchbrechung (330, 1130) und die die Eintrittsöffnung(en) in überlappender Beziehung zueinander vorliegen können, jedoch die Austrittsöffnung(en) nicht in überlappender Beziehung mit der zweiten Durchbrechung (390, 1190) vorliegen müssen, und in der zweiten Position die Austrittsöffnung(en) und die zweite Durchbrechung (390, 1190) in überlappender Beziehung zueinander vorliegen können, jedoch die Eintrittsöffnung(en) nicht in überlappender Beziehung mit der ersten Durchbrechung (330, 1130) vorliegen müssen.

4. Ausgabeeinrichtung nach Anspruch 3,
wobei das Dosierelement (340, 1140) und zumindest eines der Halteelemente (320, 380, 1120, 1180) planar ist.

5. Ausgabeeinrichtung nach einem der Ansprüche 3 oder 4,
wobei das erste Halteelement (320, 1120) mit einem Pulverbehälter (310) gekoppelt ist, so dass die erste Durchbrechung (330, 1130) einen Durchgang eines Pulver, das in dem Behälter (310) enthalten ist, zulässt, und das erste Halteelement einen Teil des Behälters, beispielsweise eine untere Wand des Behälters, bilden kann.

6. Ausgabeeinrichtung nach einem der Ansprüche 3 bis 5,
wobei das erste und zweite Halteelement (320, 380, 1120, 1180) in Beziehung zueinander fixiert sind und die erste und zweite Durchbrechung (330, 390, 1130, 1190) lateral voneinander versetzt sind.

7. Ausgabeeinrichtung nach einem der Ansprüche 3 bis 6,
wobei das Dosierelement (340, 1140) relativ zu dem ersten und zweiten Halteelement (320, 380, 1120, 1180) verschiebbar ist.

8. Ausgabeeinrichtung nach einem der Ansprüche 3 bis 7,
wobei 1) eine Dichtung (1510) zwischen dem ersten Halteelement (320, 1120) und einer oberen Fläche des Dosierelements (340, 1140) angeordnet ist, um einen ungewollten Austritt von Pulver von der Ausgabeeinrichtung zu verhindern, und/oder eine Dichtung (1520) zwischen dem zweiten Halteelement (380, 1180) und einer unteren Fläche des Dosierelements (340, 1140) angeordnet ist, um einen ungewollten Austritt von Pulver von der Ausgabeeinrichtung zu verhindern; und/oder 2) eine Dichtung (1530) um die zweite Durchbrechung (390, 1190) zwischen dem zweiten Halteelement (380, 1180) und einer unteren Fläche des Dosierelements (340, 1140) angeordnet ist, um einen Austritt von Pulver der zweiten Durchbrechung (390, 1190) zu verhindern, sofern das Dosierelement (340, 1140) nicht geeignet positioniert ist.

9. Ausgabeeinrichtung nach einem der Ansprüche 1 bis 8,
wobei das Dosierelement (340, 1140) zu der ersten Position oder der zweiten Position vorgespannt ist.

10. Ausgabeeinrichtung nach einem der vorhergehenden Ansprüche, mit einer Mehrzahl von Dosierhohlräumen (350, 850, 950, 1050, 1101, 1102, 1103, 1200, 1300, 1400), wobei die Ausgabeeinrichtung betätigt werden kann, um Pulver von einem vorbestimmten Bruchteil des Gesamthohlraumvolumens auszugeben, um das ausgegebene Pulvervolumen zu variieren.

11. Austauschbare Pulverkassette zum Liefern von Pulver in einem Additivherstellprozess, wobei die Kassette umfasst,
einen Behälter (310) zum Enthalten des Pulvers,
eine Befestigung (400) zum entfernbaren Befestigen der Kassette innerhalb einer Baukammer einer Additivherstellvorrichtung, und in der der Behälter (310) mit
einer Ausgabeeinrichtung (1) zum Ausgeben eines vorbestimmten Pulvervolumens von dem Behälter (310) verbunden oder koppelbar ist, wobei die Ausgabeeinrichtung (1) eine Pulverausgabeeinrichtung ist, wie in einem der Ansprüche 1 bis 10 definiert ist.

12. Kassette nach Anspruch 11,
ferner mit einem Pulver zum Gebrauch in dem Additivherstellprozess.

13. Kassette nach einem der Ansprüche 11 oder 12,
wobei die Befestigung (400) einen Gleitschlittenmechanismus zur Wechselwirkung mit Schienen umfasst, die in der Additivherstellvorrichtung fixiert sind.

14. Kassette nach einem der Ansprüche 11 bis 13,
ferner mit einem Identifikationsmittel, beispielsweise einer Verfolgungsvorrichtung oder einer Identitätsmarke, und wobei das Identifikationsmittel eine Hochfrequenz-Identifikationsmarke sein kann und wobei das Identifikationsmittel Information bezüglich des in der Kassette enthaltenen Pulvers enthalten kann.

15. Maschine zum selektiven Lasersintern oder selektiven Laserschmelzen, mit einer Pulverausgabeeinrichtung, wie in einem der Ansprüche 1 bis 10 definiert ist.

## Revendications

1. Distributeur de poudre de fabrication d'additif destiné à distribuer de la poudre à utiliser dans un processus de fabrication d'additif comprenant,
un organe de dosage (340, 1140) destiné à distribuer une ligne de poudre ayant un volume prédéterminé, l'organe de dosage (340, 1140) définissant un ou plusieurs vides de dosage (350, 850, 950, 1050, 1101, 1102, 1103, 1200, 1300, 1400) s'étendant à travers l'organe de dosage (340, 1140), les ou chaque vides de dosage (350, 850, 950, 1050, 1101, 1102, 1103, 1200, 1300, 1400) ayant une ouverture d'entrée définie dans une première face de l'organe de dosage (340, 1140) et une ouverture de sortie définie dans une seconde face de l'organe de dosage (340, 1140), **caractérisé en ce que** l'organe de dosage (340, 1140) est mobile en va-et-vient par rapport aux autres parties de composant (320, 380, 1120, 1180) du distributeur entre une première position dans laquelle la poudre peut passer et être retenue à l'intérieur du ou des vides de dosage (350, 850, 950, 1050, 1101, 1102, 1103, 1200, 1300, 1400) à travers l'ouverture ou les ouvertures d'entrée et une seconde position dans laquelle le volume prédéterminé de poudre peut être distribué à travers l'ouverture ou les ouvertures de sortie.

2. Distributeur selon la revendication 1, dans lequel, 1) le volume défini par les un ou plusieurs vides de dosage est équivalent au volume prédéterminé de poudre ; et/ou 2) l'organe de dosage définit un vide de dosage allongé destiné à distribuer de la poudre ; et/ou 3) l'organe de dosage définit une pluralité de vides de dosage agencés dans deux ou plusieurs rangées décalées destinés à distribuer de la poudre ; et/ou 4) l'organe de dosage comprend une pluralité de vides de dosage obliques destinés à distribuer de la poudre.

3. Distributeur selon la revendication 1 ou la revendication 2, dans lequel l'organe de dosage (340, 1140) est pris en sandwich de façon mobile entre des premier et second organes de retenue (320, 380, 1120, 1180),
le premier organe de retenue (320, 1120) définissant une première ouverture (330, 1130) destinée à alimenter en poudre l'ouverture ou les ouvertures d'entrée et le second organe de retenue (380, 1180) définissant une seconde ouverture (390, 1190) destinée à permettre une distribution de poudre depuis l'ouverture ou les ouvertures de sortie et dans lequel, dans la première position, la première ouverture (330, 1130) et l'ouverture ou les ouvertures d'entrée peuvent être dans une relation de chevauchement les unes avec les autres mais l'ouverture ou les ouvertures de sortie peuvent ne pas être dans une relation de chevauchement avec la seconde ouverture (390, 1190), et dans la seconde position, l'ouverture ou les ouvertures de sortie et la seconde ouverture (390, 1190) peuvent être dans une relation de chevauchement les unes avec les autres mais l'ouverture ou les ouvertures d'entrée peuvent ne pas être dans une relation de chevauchement avec la première ouverture (330, 1130).

4. Distributeur selon la revendication 3, dans lequel l'organe de dosage (340, 1140) et au moins l'un des organes de retenue (320, 380, 1120, 1180) est plan.

5. Distributeur selon la revendication 3 ou la revendication 4, dans lequel le premier organe de retenue (320, 1120) est couplé à un contenant de poudre (310) de sorte que la première ouverture (330, 1130) permette le passage d'une poudre contenue dans le contenant (310) et le premier organe de retenue peut former une partie du contenant, par exemple une paroi inférieure du contenant.

6. Distributeur selon l'une quelconque des revendications 3 à 5, dans lequel les premier et second organes de retenue (320, 380, 1120, 1180) sont fixés l'un par rapport à l'autre et les première et seconde ouvertures (330, 390, 1130, 1190) sont décalées latéralement l'une de l'autre.

7. Distributeur selon l'une quelconque des revendications 3 à 6, dans lequel l'organe de dosage (340, 1140) est coulissant par rapport aux premier et second organes de retenue (320, 380, 1120, 1180).

8. Distributeur selon l'une quelconque des revendications 3 à 7, dans lequel 1) un joint (1510) est disposé entre le premier organe de retenue (320, 1120) et une surface supérieure de l'organe de dosage (340, 1140) afin d'empêcher une sortie non souhaitée de poudre du distributeur, et/ou un joint (1520) est disposé entre le second organe de retenue (380, 1180) et une surface inférieure de l'organe de dosage (340, 1140) afin d'empêcher une sortie non souhaitée de poudre du distributeur ; et/ou 2) un joint (1530) est disposé autour de la seconde ouverture (390, 1190) entre le second organe de retenue (380, 1180) et une surface inférieure de l'organe de dosage (340, 1140) afin d'empêcher une sortie de poudre de la seconde ouverture (390, 1190) à moins que l'organe de dosage (340, 1140) soit positionné de façon appropriée.

9. Distributeur selon les revendications 1 à 8, dans lequel l'organe de dosage (340, 1140) est sollicité vers la première position ou la seconde position.

10. Distributeur selon l'une quelconque des revendications précédentes, ayant une pluralité de vides de dosage (350, 850, 950, 1050, 1101, 1102, 1103, 1200, 1300, 1400) dans lequel le distributeur peut être actionné pour distribuer de la poudre en provenance d'une fraction prédéterminée du volume de vide total afin de faire varier le volume de poudre distribué.

11. Cartouche de poudre remplaçable destinée à l'alimentation en poudre dans un processus de fabrication d'additif, la cartouche comprenant
un contenant (310) destiné à contenir la poudre,
une monture (400) destinée à monter de façon amovible la cartouche à l'intérieur d'une chambre de fabrication d'un appareil de fabrication d'additif, et dans laquelle le contenant (310) est raccordé à ou peut être couplé à
un distributeur (1) destiné à distribuer un volume prédéterminé de poudre en provenance du contenant (310), où le distributeur (1) est un distributeur de poudre tel que défini dans l'une quelconque des revendications 1 à 10.

12. Cartouche selon la revendication 11, comprenant en outre de la poudre à utiliser dans un processus de fabrication d'additif.

13. Cartouche selon la revendication 11 ou la revendication 12, dans laquelle la monture (400) comprend un mécanisme de coulisseau destiné à interagir avec des rails fixés à l'intérieur de l'appareil de fabrication d'additif.

14. Cartouche selon l'une quelconque des revendications 11 à 13, comprenant en outre un moyen d'identification, par exemple un dispositif de suivi ou une étiquette d'identification et dans laquelle le moyen d'identification peut être une étiquette d'identification par radiofréquence et dans laquelle le moyen d'identification peut contenir des informations relatives à la poudre contenue dans la cartouche.

15. Machine à fusion laser sélective ou à frittage laser sélectif comprenant un distributeur de poudre tel que défini dans l'une quelconque des revendications 1 à 10.
